(19) **Europäisches Patentamt / European Patent Office / Office européen des brevets**

(11) **EP 2 146 220 A1**

(12) # EUROPÄISCHE PATENTANMELDUNG

(43) Veröffentlichungstag:
**20.01.2010 Patentblatt 2010/03**

(51) Int Cl.:
***G01S 13/02*** *(2006.01)*

(21) Anmeldenummer: **09013968.4**

(22) Anmeldetag: **14.09.2004**

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.09.2003 DE 10342767**

(62) Dokumentnummer(n) der früheren Anmeldung(en) nach Art. 76 EPÜ:
**04765187.2 / 1 664 836**

(71) Anmelder: **INDYON GmbH**
**82343 Pöcking (DE)**

(72) Erfinder:
• **Plettner, Andreas**
**82335 Berg (DE)**

• **Klose-Paril, Berthold**
**80939 München (DE)**

(74) Vertreter: **Grünecker, Kinkeldey,**
**Stockmair & Schwanhäusser**
**Anwaltssozietät**
**Leopoldstrasse 4**
**80802 München (DE)**

Bemerkungen:
Diese Anmeldung ist am 06-11-2009 als Teilanmeldung zu der unter INID-Code 62 erwähnten Anmeldung eingereicht worden.

(54) **Transponderunterstützendes positionier- und steuerungssystem**

(57) System zum fahrzeuggestützten Ein- und Auslagern von Waren in einem Lager mit automatischer Positionsbestimmung zumindest der eingelagerten Waren, mit einer Vielzahl von verteilt in den Boden des Lagers eingebrachten Transpondereinrichtungen, wobei jede Transpondereinrichtung Informationen speichert, die zumindest indirekt die Position der entsprechenden Transpondereinrichtung innerhalb des Lagers repräsentieren, einem Fahrzeug zum Transportieren von ein- und auszulagernden Waren, einer auf dem Fahrzeug angebrachten Leseeinrichtung zum automatischen Auslesen von informationen aus Transpondern, die von dem Fahrzeug überfahren werden, einer Computereinrichtung, die die von der Leseeinrichtung aus den Transpondern ausgelesenen Informationen empfängt und daraus zumindest die Position, an der die Ware innerhalb des Lagers eingelagert wird, bestimmt und speichert.

Fig. 1

**Beschreibung**

Die vorliegende Erfindung betrifft ein transponderunterstütztes Positioniersystem und betrifft insbesondere ein System zum fahrzeuggestützen Ein- und Auslagern von Waren in einem Lager mit automatischer Positionsbestimmung der eingelagerten Waren sowie ein entsprechendes Verfahren und ein hierfür geeignetes Fahrzeug.

Um in einem Warenlager eine Lageroptimierung sowie eine automatische Warenverfolgung zu gewährleisten, ist es notwendig, Be- und Entladevorgänge von Transportfahrzeugen in einem Lagerbereich positionsgenau zu kontrollieren. Somit kann jederzeit eine Warenbestandssicherheit gewährleistet werden.

Entsprechende Warenverfolgungssysteme können in Freilagern unter Verwendung eines satellitengestützten Positionierungssystems (GPS) mit einem differentiellen GPS-System realisiert werden. Da GPS jedoch nur in Aussenbereichen einsetzbar ist, können derartige Warenverfolgungssysteme nicht in Lagerhallen eingesetzt werden. Hierzu werden sogenannte Indoor-Navigationssysteme benötigt, die eine positionsgenaue Verfolgung von Transportfahrzeugen bei Warenbe- bzw. -entladevorgängen auch in Lagerhallen ermöglichen. Eine Ortung von Transportfahrzeugen, wie beispielsweise Gabelstaplern, innerhalb geschlossener bzw. überdachter Lagerhallen ermöglicht eine automatisierte Verwaltung von transportierten bzw. zu transportierenden Gütern.

DE-C1-199 38 345 beschreibt ein Verfahren und eine Vorrichtung zur Erfassung der Position von einem Fahrzeug in einem vorgegebenen Bereich, insbesondere eine Lagereinrichtung sowie ein Lagerverwaltungsverfahren und -system. Die Erfassung der Position des Fahrzeugs beruht im Wesentlichen auf zwei Messungen, einer inkrementalen Messung des Raddrehwinkels, die einen Rückschluss auf den gefahrenen Weg und somit auf eine relative Positionsänderung ermöglicht, sowie ein optische Messung der absoluten Position über Referenzpunkte an der Lagerdecke, die optisch abgegriffen werden. Als Referenzpunkte werden spezielle Streifenanordnungen an die Lagerdecke angebracht, die beim passieren mit dem Laserstrahl eine Berechnung der Position und des Winkels erlauben. Somit können Fehler bei der Positionsbestimmung durch die inkrementale Messung des Raddrehwinkels kompensiert und korrigiert werden. Diese Technologie weist jedoch Nachteile in Bezug auf die Präzision der Positionsänderung des Transportfahrzeugs auf, da insbesondere Schwierigkeiten bestehen, Schlupf und Drift, die bei einer gefahrenen Strecke auftreten können, zu kompensieren. Des Weiteren ist der mechanische Abgriff der Strecke vom Rad anfällig gegenüber Staub, Schmierfilme, Russ etc. Weiterhin besteht ein Nachteil dieser Technologie in den hierfür aufzuwendenden Kosten.

Die Schwierigkeiten bei der Bestimmung der Präzision der Positionsänderung können dazu führen, dass die oben beschriebene Vorrichtung in vielen Fällen nicht anwendbar ist, da die in einem Lagerverwaltungssystem geforderte Genauigkeit damit nicht erzielt werden kann oder die Kosten zu hoch sind. In der Regel sind in gebräuchlichen Lagerverwaltungssystemen Genauigkeiten von kleiner als 40 cm notwendig. Diese Anforderung ergibt sich daraus, zwei benachbarte Lagerplätze in einem Lagerbereich, in dem Gegenstände bzw. Waren zum Beispiel auf Paletten gelagert sind, voneinander unterscheiden zu können, wobei die Genauigkeit der Be- oder Entladeposition um mindestens ein halbe Palettenbreite bekannt sein muss.

Ein weiteres Problem in Bezug auf die geforderte Genauigkeit besteht darin, dass verschiedene Lagerbereiche meist unterschiedliche Strukturen aufweisen, da Lagerbereiche häufig durch Erweiterungen vergrößert werden und in der Regel aus mehreren Lagerhallen bestehen, die unterschiedliche Grundrisse und Höhen haben können. In derartigen Strukturen können Lagergassen Längen von mehr als 50 Meter aufweisen. Weiterhin können derartige Lagergassen schmal ausgeführt sein und auch dazu verwendet werden, dass Waren oder Gegenstände unmittelbar in derartigen Gassen abgelegt werden, wenn ansonsten keine Lagerplätze frei sind. Insbesondere in langen und schmalen Lagergassen müssen starke Kurvenfahrten von Transportfahrzeugen vermieden werden. Deshalb ist die geforderte Genauigkeit zur Positionsbestimmung in einem Lagerverwaltungssystem ein wesentlicher Faktor, dem Rechnung getragen werden muss.

Es ist die Aufgabe der vorliegenden Erfindung, eine Möglichkeit anzugeben, die eine einfache und präzise Positionsbestimmung und darauf basierende Fahrzeugsteuerung bei der Ein- und Auslagerung von Waren in einem Lager ermöglicht.

Diese Aufgabe wird in erfindungsgemäßer Weise durch die Gegenstände der Ansprüche 1, 11 und 13 gelöst.

Bevorzugte Ausgestaltungen sind Gegenstand der Unteransprüche.

Die vorliegende Erfindung baut insbesondere auf der Erkenntnis auf, dass Systeme, bei denen die Position einer einzulagernden Ware dadurch bestimmt wird, dass das transportierende Fahrzeug über Radsensoren den zurückgelegten Weg erfasst, zu ungenau bzw. zu fehleranfällig sind. Darüber hinaus baut die Erfindung auf der Erkenntnis auf, dass bisher bekannte Systeme, bei denen jede Ware einen Transponder trägt, zumindest zum jetzigen Zeitpunkt zu teuer sind und darüber hinaus sich diese Transponder nur lesen lassen, wenn ein Lesegerät in die Nähe der eingelagerten Waren gebracht wird. Das bedeutet, dass derartige Systeme nicht geeignet sind, im Rahmen einer effizienten Warenverfolgung verwendet zu werden.

Gemäß der vorliegenden Erfindung werden zumindest über den überwiegend befahrenen Teil eines Lagers, am Boden in vorgegebenen Abständen verteilt, Transponder befestigt, die beim Überfahren mit dem Transportfahrzeug einen Aufschluss über die aktuelle Position des Transportfahrzeugs und damit der beförderten Ware zulassen. Diese Verfolgung dauert an bis zur eigentlichen Einlagerung der Ware, so dass letztendlich die endgültige Position, an der die Ware abgelagert wurde, erfasst werden kann. Werden diese Daten kombiniert mit Daten, die die Ware beschreiben, so bietet dies eine Grundlage für ein effizientes Warenverfolgungssystem.

Bevorzugte Ausgestaltungen der Efindung werden im folgenden unter Bezugnahme auf die beiliegenden Zeichnungen näher erläutert. Dabei zeigen die Zeichnungen im einzelnen:

Figur 1      zeigt eine schematische Ansicht eines Lagers zur Verdeutlichung der Funktionsweise einer bevorzugten Ausführungsform der vorliegenden Erfindung;

Figur 2      zeigt eine schematische Darstellung eines für das bevorzugte Ausführungsbeispiel benötigten Transportfahrzeugs;

Figur 3      zeigt eine schematische Darstellung eines Transponders, der von einem Antennenfeld überstrichen wird und

Figur 4a - 4h      zeigen schematische Darstellungen unterschiedlicher Variationen, wie das Antennenfeld in Bezug auf die Verteilung der Transponder gewählt werden kann.

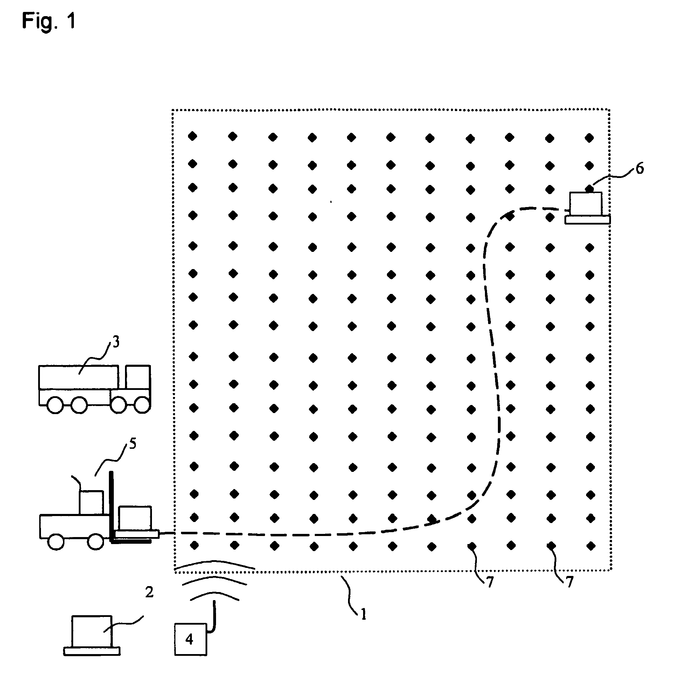

Figur 1 zeigt eine schematische Ansicht eines Lagers 1, in das Waren ein- und Ausgelagert werden. Eine Ware 2, die beispielsweise mit einem LKW 3 angeliefert wird, trägt vorzugsweise einen Barcode, der einer Computereinrichtung 4 des Lagers über ein geeignetes Lesegerät ermöglicht, die Identität und/oder die Art der Ware automatisch zu erkennen und zu speichern. Zum Einlagern wird die Ware 2 von einem Fahrzeug, vorzugsweise einem Gabelstapler 5 aufgenommen und zu einer geeigneten Position 6 innerhalb des Lagers befördert. Ein geeigneter Weg vom Eingang des Lagers bis zur Position 6 ist gestrichelt markiert. Auf dem Weg des Gabelstaplers 5 zur Einlagerposition 6 überstreicht ein auf dem Fahrzeug 5 montiertes Lesegerät mehrere Transponder 7 die auf dem Boden des Lagers verteilt angeordnet sind. Die Transponder 7 sind vorzugsweise in kleinen Löchem im Boden des Lagers versenkt und können somit problemlos überfahren werden. Die auf dem Fahrzeug 5 befindliche Leseeinrichtung weist mindestens eine Antenne auf, die ein entsprechendes Antennenfeld definiert. Sobald das Antennenfeld der Leseeinrichtung über einen der Transponder 7 bewegt wird, werden Informationen aus dem Transponder ausgelesen. Diese Informationen definieren zumindest in indirekter Weise die Position der entsprechenden Transportereinrichtung innerhalb des Lagers 1, so dass jedesmal, wenn derartige Informationen ausgelesen werden, die aktuelle Position des Fahrzeugs 5 bestimmt werden kann. Somit werden auf dem Weg vom Eingang des Lagers bis zur Einlagerposition 6 mehrere derartige Positionsbestimmungen durchgeführt, jedesmal dann, wenn ein Transponder überfahren wird. Letztendlich führt dies dazu, dass im Zeitpunkt des Einlagerns der Ware 2 an der Position 6 automatisch die genaue Einlagerposition bekannt ist. Die verschiedenen zwischenzeitlichen Positionsbestimmungen können in einer nicht dargestellten Computereinrichtung, die sich auf dem Fahrzeug 5 befindet, zwischengespeichert werden oder können über Funk an eine ortsfeste Computereinrichtung 4 zur weiteren Verarbeitung übertragen werden.

Zur bloßen Bestimmung der Lagerposition ist es prinzipiell nur notwendig die Lagerpositionen zu kennzeichnen und nicht die Fahrwege. Die Dokumentation der Fahrwege bzw. die Kenntnis der aktuellen Position können auch zur Navigationsunterstützung und für statistische Zwecke (z.B. durchschnittliche Dauer als Funktion des zurückgelegten Weges) einer Einlagerung) herangezogen werden.

Nicht jeder der 7 muss ein hochwertiger Transponder sein, der in der Lage ist, Informationen über die Position dieser Transponder abzugeben. Stattdessen können zwischendurch auch Transponder verwendet werden, die nur als Markierungen dienen, das heißt deren Überfahren lediglich erkannt wird. Diese Markierungen dienen zur Orientierung zwischen zwei eigentlichen Positionsbestimmungen und werden gewissermaßen beim Überfahren gezählt. Auf diese Weise ist es möglich, die Abstände zwischen den Transpondem klein zu halten und trotzdem die Gesamtkosten im Rahmen zu halten, da die Transponder, die lediglich als Markierungen dienen, wesentlich kostengünstiger sind.

Selbstverständlich muss im Zeitpunkt der Ablage einer Ware 2 an der Position 6 berücksichtigt werden, dass die Einlagerposition einen Offset gegenüber der Fahrzeugposition hat, da das Fahrzeug die Ware in ein entsprechendes Regal legt. Dieser Abstand ist entweder stets gleichbleibend und kann daher addiert werden, oder er wird über einen speziellen Abstandssensor gemessen. Dies ist insbesondere erforderlich, wenn das Fahrzeug als Gabelstapler ausgeführt ist und in der Lage ist, Waren bzw. Paletten in unterschiedliche Tiefen des Regals einzulagern.

Vorzugsweise ist an dem Fahrzeug 5 außerdem eine Einrichtung vorhanden, die die Einlagerhöhe bestimmen kann, so dass letztendlich x, y und z Koordinaten für die Einlagerungsposition erfasst werden können. All diese Daten werden in einer Computereinrichtung auf dem Fahrzeug gespeichert oder kontinuierlich über Funk an die Computereinrichtung 4 übertragen.

Die Endposition einer eingelagerten Ware wird dadurch erkannt, dass der Fahrer des Fahrzeugs eine bestimmte Taste drückt, mit der die Einlagerung bestätigt wird und somit das Ende der Beförderung angezeigt wird. Selbstverständlich kann dies auch automatisiert dadurch erfolgen, dass ein Ablagesensor an dem Fahrzeug vorhanden ist, der das Ablegen der Ware automatisch detektiert. Selbstverständlich sind auch andere Lösungen möglich, beispielsweise, dass derartige Sensoren sich in den Regalen befinden und somit der Zeitpunkt der Einlagerung über einen derartigen Sensor erfasst wird.

Wenn die Transponder 7 nicht alle Positionsdaten speichern, sondern teilweise nur als Markierungen, die gezählt werden, dienen, so kann eine derartige Ausführungsform mit Sensoren an dem Fahrzeug 5 kombiniert werden, die den zurückgelegten Weg des Fahrzeugs über Radumläufe erfassen. Damit kann zwischen zwei tatsächlichen Positionsbestimmungen über die Markierungen und die Radsensoren die dazwischenliegende Position sehr genau abgeschätzt werden.

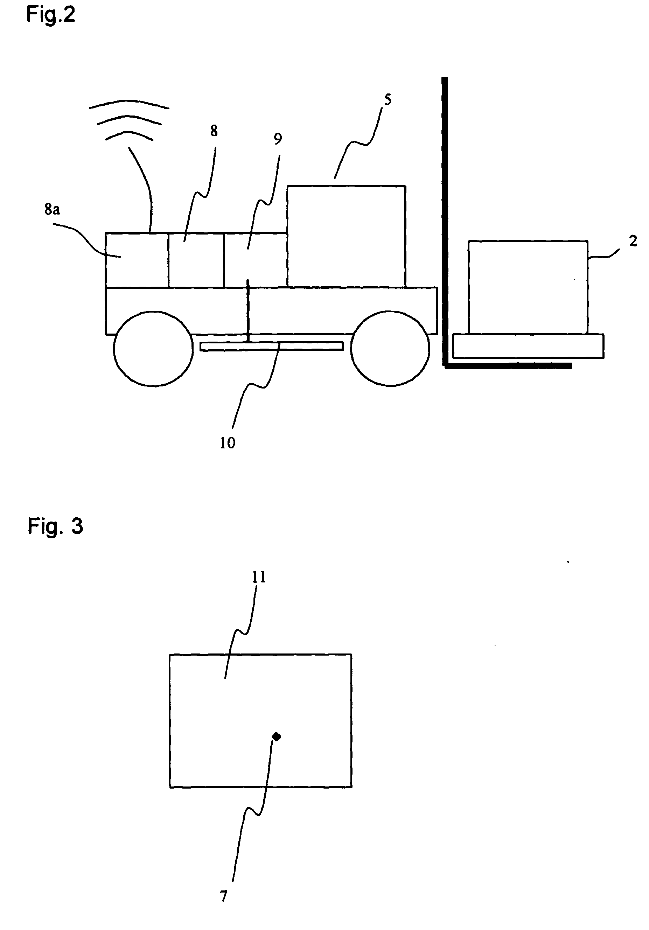

Figur 2 zeigt das Fahrzeug 5, bei dem es sich vorzugsweise um einen Gabelstapler handelt. Vorzugsweise weist dieser Gabelstapler eine Computereinrichtung 8 auf, die mit einer Leseeinrichtung 9 gekoppelt ist. Die Leseeinrichtung weist zumindest eine Antenne 10 auf, die ein Antennenfeld definiert, das auf der Unterseite des Gabelstaplers angeordnet ist und die überfahrenen Transponder detektiert und ausliest. Die ausgelesene Information wird in der Computereinrichtung 8 zwischengespeichert und in regelmäßigen Abständen oder kontinuierlich mittels eines Funkmodems 8a an eine ortsfeste Computer- oder Servereinrichtung übertragen.

Figur 3 illustriert ein durch die Antenne 10 der Figur 2 definiertes Antennenfeld 11, welches gerade einen Transponder 7 überstreicht. Solange sich das Antennenfeld 13 über dem Transponder befindet, kann die in den Transpondern gespeicherte Information, vorzugsweise Positionsinformation, ausgelesen werden.

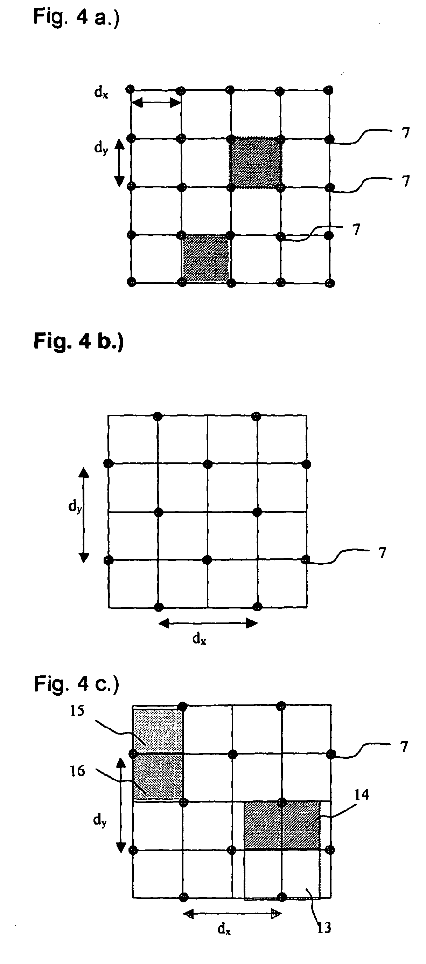

Figuren 4a - 4 h zeigen unterschiedliche Ausführungsformen für die Antennenfelder.

Insbesondere ist es möglich, mittels mehrerer Antennen mehrere Antennenfelder zu definieren, die sich auch überlappen können. Mehrere Antennenfelder haben den Vorteil, dass über die zeitliche Abfolge des Überstreichens unterschiedlicher oder gleicher Transponder eine Richtungsbestimmung zusätzlich zur aktuellen Position möglich wird. Ähnliches gilt für überlappende Bereiche der Antennenfelder. Das Erkennen eines Transponders in einem überlappenden Bereich ermöglicht ebenfalls die Verfeinerung der aktuellen Positionsbestimmung.

Wird nur mit einem einzigen Antennenfeld gearbeitet, so wird die Auflösung der Positionsbestimmung im wesentlichen durch den Abstand der Transponder zueinander definiert.

Der Vorteil der Verwendung mehrerer Antennenfelder besteht daher darin, dass eine Verfeinerung der Positionsbestimmung trotz gleichbleibender Transpondersabstände ermöglicht wird.

Figur 4a illustriert den Fall, dass ein Antennenfeld 12 durch eine einzige Antenne gebildet wird. Dabei sind zwei Varianten möglich, nämlich dass das Antennenfeld kleiner ist, als die Fläche zwischen benachbarten Transpondern, das heißt, dass durch das Antennenfeld gleichzeitig immer nur ein Transponder überstrichen werden kann.

Im anderen Fall ist das Antennenfeld größer als die entsprechende Fläche, so dass gleichzeitig mehrere Transponder gelesen werden können.

Figur 4b zeigt ein anderes Muster zur Anordnung der Transponder 7. Dieses Muster entspricht einem 4-Eck bzw. Rechteck mit jeweils einem Transponder an den Ecken und im Mittelpunkt.

Figur 4c zeigt einen Fall, bei dem das Antennenfeld durch jeweils zwei Teilfelder 13, 14 bzw. 15 und 16 gebildet wird.

Bei dem gezeigten linken Fall (Teilfelder 15, 16), für den gilt:

$$a_x = \frac{1}{2} d_x \wedge a_y <= \frac{1}{2} d_y$$

kann es zu der Situation kommen, dass kein Transponder gelesen wird. Diese Information kann jedoch auch interpretiert werden, da aus den vorangegangenen Messungen die Richtung erkennbar ist und bis kurz vor Erreichen dieser Position die anderen Transponder gelesen werden können. Somit ist die Position eindeutig bestimmbar.

Es ergibt sich eine Toleranz t jeweils in x- und y-Richtung:

$$t_x = \frac{1}{2} d_x$$

$$t_y = \frac{1}{2} d_y$$

Für den Rechten Fall, für den gilt:

$$a_x = \frac{3}{4} d_x \wedge a_y \geq \frac{1}{2} d_y$$

kann es zu der Situation kommen, in der ein Lesefeld gleichzeitig zwei Transponder überdeckt und dadurch keine Information lesen kann (Falscher Read). Diese Situation kann jedoch interpretiert werden, da aus den vorangegangenen Messungen die Richtung erkennbar ist, um bis kurz vor Erreichen dieser Position die anderen Transponder gelesen werden können. Somit ist die Position eindeutig bestimmbar. Selbstverständlich können auch Transpondersysteme Verwendung finden, bei denen eine Antenne gleichzeitig zwei oder mehr Transponder detektieren kann.

Es ergibt sich eine Toleranz t jeweils in x- und in y-Richtung:

$$t_x = \frac{1}{4} d_x$$

$$t_y = \frac{1}{2} d_y$$

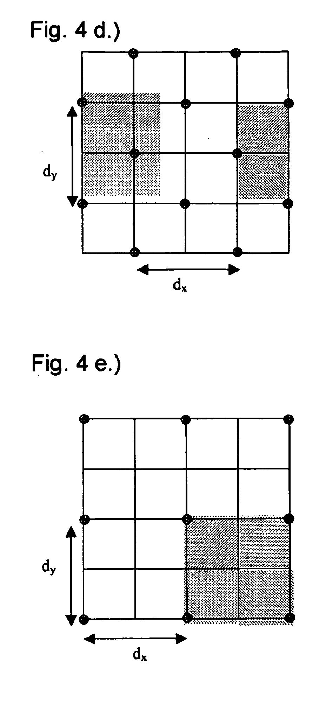

Figur 4d zeigt einen Fall, bei dem sich die Lesefelder jeweils mit ihrer halben Länge überlappen. Vorzugsweise werden die einzelnen Felder in y-Richtung um jeweils ein Drittel verlängert, so dass bei jedem Antennenfeld zwei Drittel nicht überlagert sind und ein Drittel überlagert ist, wodurch sich ein Verhältnis zwischen nicht überlagerter Fläche und überlagerter Fläche von 2 : 1 ergibt.

Gemäß dem linken Fall kann eine Verlängerung der Antennenfelder um ein Drittel auch in x-Richtung erfolgen.

Bei dem dargestellten Fall würde sich für jede Antenne ein "Falscher Read" ergeben, der entsprechend interpretiert werden kann und somit eine eindeutige Positionsermittlung zulässt. Wie angedeutet, können auch Transpondersysteme verwendet werden, bei denen zwei oder mehr Transponder gleichzeitig gelesen werden können. In diesem Fall werden die Daten der vorhergehenden Messung nur zur Bestimmung der Ausrichtung benötigt.

$$a_x = \frac{3}{4} d_x \wedge a_y \frac{2}{3} d_y, \ \text{Überlappung} = \frac{1}{3} d_y,$$

wobei $a_x$, $a_y$ die Ausdehnung des Antennenfeldes angibt.

Es ergibt sich somit eine Toleranz t jeweils in x- und y-Richtung:

$$t_x = \frac{1}{4} d_x$$

$$t_y = \frac{1}{3} d_y$$

Durch Verkürzen des Feldes in y-Richtung auf Werte unter den Transponderabstand wird aus dem "Falschen Read" ein "Kein Read", und dies kann entsprechend interpretiert werden.

$$a_x = \frac{1}{2} d_x \wedge a_y = \frac{2}{3} d_y \, , \quad \text{Überlappung} = \frac{1}{3} d_y$$

Es ergibt sich somit eine Toleranz t in jeweils x- und y-Richtung zu:

$$t_x = \frac{1}{2} d_x$$

$$t_y = \frac{1}{3} d_y$$

Figur 4e zeigt 4 Antennen, die als Viereck bzw. Rechteck angeordnet sind.

Bei diesem Fall ist vorgesehen, dass jede Antenne maximal einen Transponder lesen kann. Die Felder der Antennen überlappen sich an den berührenden Kanten nur soweit, dass ein Transponder, der sich direkt unter einer Mittellinie befindet, von beiden angrenzenden Antennenfeldern erfasst wird. Jedes Antennenfeld ist gleich einem Feld mit halbem Transponderabstand und alle an den Kanten befindlichen Transponder befinden sich im Lesefeld.

$$a_x = \frac{1}{2} d_x \wedge a_y = \frac{1}{2} d_y \, , \quad \text{Überlappung} = 0$$

Es ergibt sich eine Toleranz t jeweils in x- und y-Richtung:

$$t_x = \frac{1}{2} d_x$$

$$t_y = \frac{1}{2} d_y$$

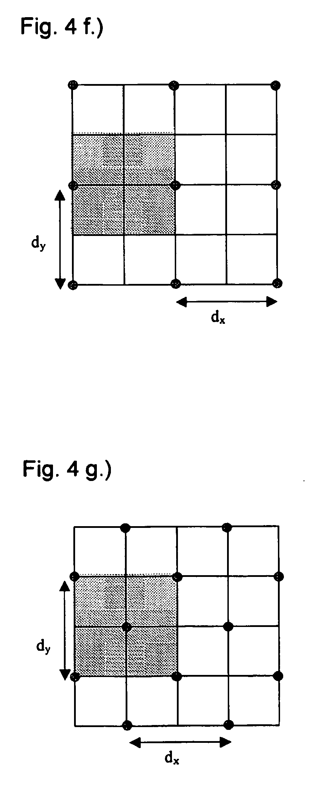

Figur 4f zeigt wiederum 4 Antennen als Viereck angeordnet. Eine Antenne kann maximal einen Transponder lesen. Die Felder der Antennen überlappen sich an den berührenden Kanten um 50 % (indem jedes Antennenfeld gegenüber der Variante nach Figur 4e um 4/3 vergrößert wird). Jedes Antennenfeld ist gleich mit einem Feld mit halbem Transponderabstand und alle an den Kanten befindlichen Transponder befinden sich im Lesefeld.

$$a_x = \frac{2}{3} d_x \wedge a_y = \frac{2}{3} d_y \, , \;\; \text{Überlappung} = \; 50 \, \%$$

Es ergibt sich eine Toleranz t jeweils in x- und y-Richtung zu:

$$t_x = \frac{1}{3} d_x$$

$$t_y = \frac{1}{3} d_y$$

Bei Figur 4g sind die Antennen wie in Figur 4f angeordnet, jedoch befindet sich im Unterschied zu diesem Fall ein weiterer Transponder im Mittelpunkt eines jeden Vierecks. Die Antennenfelder überlappen sich wie bei der Figur 4f. Mit dieser Anordnung lässt sich die Genauigkeit erhöhen.

$$a_x = \frac{2}{3} d_x \wedge a_y = \frac{2}{3} d_y \, , \;\; \text{Überlappung} = \; 50 \, \%$$

Es ergeben sich Toleranzen t jeweils in x- und y-Richtung zu

$$t_x = \frac{1}{6} d_x$$

$$t_y = \frac{1}{6} d_y$$

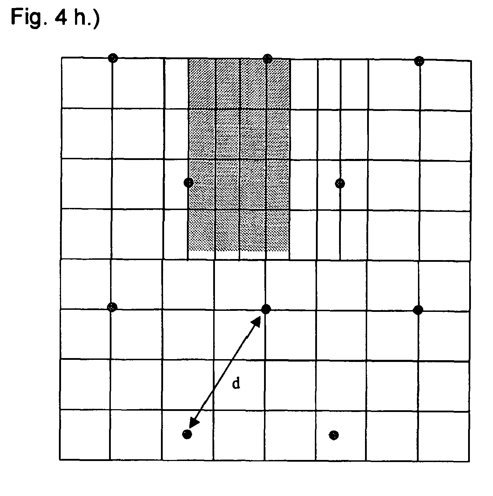

Bei der Anordnung gemäß Figur 4h sind die Abstände sämtlicher benachbarter Transponder äquidistant gewählt. Daraus ergibt sich eine Hexagonalanordnung. Bei der gezeigten Variante überlappen sich die beiden Antennenfelder wiederum in y-Richtung.

Generell ist zu den oben beschriebenen Varianten zu sagen, dass diese Leseeinrichtungen verwendet werden können, die in einem Antennenfeld gleichzeitig mehrere Transponder lesen können. Ebenso ist es möglich, Antennenfelder zu nehmen, die nur einen Transponder gleichzeitig lesen können und die dann beim Überstreichen von zwei Transpondem gleichzeitig einen "Falschen Read" ergeben. Dieser "Falsche Read" ist jedoch auch eine verwertbare Information, so dass in diesem Fall drei unterschiedliche Zustände erreicht werden können, die zur genaueren Positionsbestimmung beitragen, bzw. die eine Fahrtrichtungserkennung ermöglichen.

Die oben beschriebenen Toleranzen spielen entsprechend eine Rolle hinsichtlich der Genauigkeit, mit der die Ware abgelegt werden kann und damit auch wieder auffindbar ist.

Durch das ständige Einlesen neuer Positionsdaten bis hin zur endgültigen Einlagerung kann eine Bewegungshistorie erzeugt werden, die die Bewegungsrichtung und Orientierung des Staplers beim Ein- und Auslagern zulässt. Ebenfalls werden hierdurch Bestimmungen von Geschwindigkeit und Beschleunigung des Fahrzeugs ermöglicht. Weiterhin lassen die Daten statistische Aussagen zu, die eine Aussage über den zurückgelegten Weg sowie Aussagen über zeitliche Abfolgenzu lassen. Beispielsweise ist eine Aussage möglich, wie lange es dauert, um einen bestimmten LKW abzuladen und die Ware an die erforderlichen Positionen zu bringen. Auch kann vorausgesagt werden, wann das Fahrzeug bzw. der Gabelstapler an einer bestimmten Lagerposition eintreffen wird. Darüber hinaus können die ständig aufgenommenen Positionsdaten dazu verwendet werden, für das Fahrzeug bzw. den Gabelstapler in Echtzeit die Fahrtrichtung zu steuern.

Obwohl, wie oben beschrieben, die Positionsbestimmungsgenauigkeit sich erhöhen lässt, indem mehrere, insbesondere sich überlappende, Antennenfelder verwendet werden und damit bessere Positionsangaben erreicht werden können, als wenn die Genauigkeit nur vom Abstand der Transponder zueinander abhängen würde, verbleibt eine Restfehlertoleranz hinsichtlich der Positionsbestimmung. Gemäß der vorliegenden Erfindung ist diese sich ergebende Toleranz jedoch absolut bestimmbar und hängt nicht vom zurückgelegten Weg des Gabelstaplers ab, wie dies der Fall ist, wenn die Position des Staplers durch Radsensoren bestimmt wird.

Um eine Ware eindeutig wiederzufinden muss die Toleranz t kleiner als die halbe Artikelgröße sein:

$$t_x = \frac{1}{2}w_x \wedge t_y < \frac{1}{2}w_y$$

wobei t für die Toleranz und w für die Abmessung der zu lagernden Waren/Palette in x-und y-Richtung steht.

Für das Auslagern einer Ware wird aus dem System die abgespeicherte Position der Ware ausgelesen. Diese Positionsangabe kann nun verwendet werden, um den Gabelstapler an die Richtige Position zu führen, entweder vollautomatisch oder durch Vorgabe von Richtungsangaben.

Generell sind vorzugsweise Einrichtungen vorgesehen, die dem System ermöglichen zu wissen, welche Ware eingelagert werden soll. Dies kann vorzugsweise dadurch geschehen, dass sich auf der Ware ein Barcode befindet, der vor dem Einlagern eingelesen wird. Möglich ist auch, dass die Ware aus einem Produktionsplanungs- und Steuerungssystem (PPS) vorbekannt ist und bei der Übergabe an den Gabelstapler diese Daten übernommen werden.

Selbstverständlich ist es jedoch auch möglich, dass ein Fahrer des Gabelstaplers die Position mitgeteilt bekommt und dann die Gabelstapler an entsprechende Stelle fährt.

Ein entscheidender Vorteil bei der vorliegenden Erfindung besteht jedoch darin, dass die gesuchte Ware mit Sicherheit an der richtigen Position steht, da das Ablegen der Ware diese Position definiert hat. insbesondere müssen Waren damit nicht nach einem bestimmten Verteilungsschema abgelegt werden, sondern können quasi beliebig abgelegt werden und problemlos mehrmals umgeschichtet werden. Nach dem Erreichen einer neuen Position wird wiederum die Endposition dem System mitgeteilt, indem das Ablegen das Abspeichern der Endposition im Zusammenhang mit den Daten, die die Ware beschreiben bewirkt.

Das System kann auch mit Varianten kombiniert werden, in dem die Waren selbst Transponder tragen. Diese Variante ist insbesondere vorteilhaft, da hier beim Aufnehmen der Ware diese sich automatisch gegenüber dem auf dem Fahrzeug befindlichen Computer identifiziert und somit zwangsläufig richtig erfasst wird. Anschließend wird der mit dieser Ware befahrene Weg durch das ständige Überfahren von Transpondern verfolgt bzw. protokolliert. Schließlich wird die Position abgespeichert, an der diese entsprechende Ware abgelegt wird. Wie oben bereits angedeutet, kann trotz Verwendung von Transpondern an den Waren das erfindungsgemäße System vorteilhaft eingesetzt werden, da sich dadurch als kompletter Verteilungsplan der entsprechenden Waren im Lager erzeugen läßt. Ohne das erfindungsgemäße System würden sich die abgelegten Waren zwar identifizieren lassen, jedoch nur dann, wenn man sie mit einem Lesegerät unmittelbar an die entsprechende Stelle hin bewegt.

Vorzugsweise ist der auf dem Fahrzeug befindliche Computer in der Lage, entsprechende Positionsdaten über einen längeren Zeitraum zu speichern. Dies ist vorteilhaft für den Fall, dass die Funkverbindung zum Server unterbrochen ist. Alternativ erlaubt das Zwischenspeichern die Möglichkeit das kein Funksystem vorgesehen ist, sondern dass das Fahrzeug bzw. der Gabelstapler ab und zu über Kabel seine Daten an den Server überträgt. Diese Variante führt zu sehr kostengünstigen Systemen. Für die drahtlose Kommunikation zwischen Fahrzeug und Server wird vorzugsweise ein Funk-LAN vorgesehen.

Selbstverständlich können die Abstände der Transponder dort dichter sein, wo die Ware tatsächlich üblicherweise abgelegt wird. In freien Bereichen, die nur überfahren werden, können die Abstände durchaus größer sein, da hier eine aktuelle Positionserfassung weniger wichtig ist. Entscheidend ist, dass das Ablegen der Waren am Lagerplatz richtig erfasst wird.

Auch das Aufnehmen von Waren aus dem Lager wird vorzugsweise in dem System bereits durch Sensoren erfasst, so dass der Warenbestand stets richtig erfasst wird. Damit wird es möglich, nicht nur zu wissen, wo sich Waren befinden, sondern es wird gleichzeitig gewährleistet, dass der exakte Bestand der Waren abrufbar ist.

Wie erwähnt, kann aus den zusätzlichen Daten, die über die Positionserfassung ableitbar sind, wie Geschwindigkeit etc., die genaue Entladezeit für einen anliefernden LKW bzw. die Beladezeit vorausgesagt werden. Das System kann vorberechnen, dass eine bestimmte Beladung länger dauert, weil für das Auslagern der Waren weite Wege zurückgelegt werden müssen. Dies ist selbst dann möglich, wenn die aufzuladenden Waren sich an völlig unterschiedlichen Stellen im Lager befinden. Das System kann für jede einzelne Ware die Bringzeit vorberechnen.

Um die z-Koordinate für das Ableben der Ware in einem Hochlager zu erfassen, hat der Gabelstapler vorzugsweise entsprechende Sensoren, die beim Abladen der Ware erfassen, in welcher Höhe der Gabelstapler die Ware abgelegt hat. Darüber hinaus wird, wie bereits erwähnt, auch der Abstand der abgelegten Ware zum Gabelstapler erfasst, um den entsprechenden Offset bei der Positionsbestimmung richtig zu erfassen.

**Patentansprüche**

1. System zum fahrzeuggestützten Ein- und Auslagern von Waren in einem Lager, mit :

   - einer Vielzahl von verteilt in den Boden des Lagers eingebrachten Transpondereinrichtungen, wobei jede Transpondereinrichtung Informationen speichert, die zumindest indirekt die Position der entsprechenden Transpondereinrichtung innerhalb des Lagers repräsentieren,
   - einem Fahrzeug zum Transportieren von ein- und auszulagernden Waren,
   - einer auf dem Fahrzeug angebrachten Leseeinrichtung zum automatischen Auslesen von Informationen aus Transpondern, die von dem Fahrzeug überfahren werden,
   - wobei die ständig aufgenommenen Positionsdaten dazu verwendet werden, für das Fahrzeug in Echtzeit die Fahrtrichtung zu steuern.

2. System nach Anspruch 1, ferner mit:

   - einer Computereinrichtung, die die von der Leseeinrichtung aus den Transpondern ausgelesenen Informationen empfängt und daraus zumindest die Position, an der die Ware innerhalb des Lagers eingelagert wird, bestimmt und speichert.

3. System nach Anspruch 2, **dadurch gekennzeichnet,**
   **dass** die Positionsbestimmung einer einzulagernden Ware während des Transports mittels des Fahrzeugs bis zur Einlagerposition entsprechend dem Überfahren unterschiedlicher Transpondereinrichtungen mehrmals vorgenommen wird, und/oder
   **dass** einige der Transpondereinrichtungen keine Positionsinformation enthalten, sondern von der Leseeinrichtung beim Überfahren lediglich detektiert werden und somit eine hilfsweise Positionsbestimmung ermöglicht wird, bis zur nächsten echten Positionsbestimmung.

4. System nach einem der Ansprüche 2 bis 3, **dadurch gekennzeichnet, dass** die Computereinrichtung zumindest aus einer auf dem Fahrzeug installierten ersten Computereinrichtung, die mit der Leseeinrichtung gekoppelt ist und einer zweiten ortsfesten Computereinrichtung besteht, die über Funk mit der ersten Computereinrichtung kommuniziert.

5. System nach einem der vorhergehenden Ansprüche, **dadurch gekennzeichnet, dass** die Leseeinrichtung mindestens eine Antenne aufweist, die ein vorbestimmtes Antennenfeld definiert, wobei das Auslesen einer Transpondereinrichtung bei Überstreichen der Transpondereinrichtung mit dem Antennenfeld erfolgt, und/oder
   dass die endgültige Positionsbestimmung beim Einlagern über die aktuelle Referenzposition des Fahrzeugs und einer Offset-Distanz berechnet wird, die dem Abstand der Ware beim Einlagern von der Referenzposition des anliefernden Fahrzeugs entspricht.

6. System nach einem der vorhergehenden Ansprüche, **dadurch gekennzeichnet, dass** die endgültige Positionsbestimmung beim Einlagern in Antwort auf ein Signal erfolgt, das vom Fahrer des Fahrzeugs gegeben wird oder durch einen Sensor gegeben wird, der das Abladen der Ware detektiert, und/oder
   dass die einzulagernde Ware bei Anlieferung durch eine Leseeinrichtung automatisch erfasst wird und diese die Ware beschreibenden Daten durch die Computereinrichtung mit der Einlagerposition zusammengeführt werden.

7. System nach einem der vorhergehenden Ansprüche, **dadurch gekennzeichnet, dass** eine Einrichtung vorgesehen ist, die zum Zeitpunkt der Einlagerung der Ware auch eine Größe erfasst, die repräsentativ für den Abstand der Ware vom Boden ist, so dass eine Positionsbestimmung in x', y' und z' durch Achse ermöglicht wird.

8. System nach einem der vorhergehenden Ansprüche, **dadurch gekennzeichnet, dass** die Leseeinrichtung mehrere Antennen aufweist.

9. System nach Anspruch 8, **dadurch gekennzeichnet, dass** sich die mehreren Antennenfelder zumindest teilweise überlappen.

10. System nach einem der vorhergehenden Ansprüche, **dadurch gekennzeichnet, dass** das Antennenfeld mehr als einen Transponder gleichzeitig überstreicht, und/oder
dass das Fahrzeug ein Gabelstapler ist.

11. Verfahren zum fahrzeuggestützten Ein- und Auslagern von Waren in einem Lager, enthaltend die Schritte:

Verteiltes Einbringen einer Vielzahl von Transpondereinrichtungen in den Boden des Lagers, wobei jede Transpondereinrichtung Informationen speichert, die zumindest indirekt die Position der entsprechenden Transpondereinrichtung innerhalb des Lagers repräsentieren,
Überfahren der Transpondereinrichtungen mit einem Fahrzeug zum Transportieren von ein- und auszulagernden Waren, welches eine Leseeinrichtung enthält, das die Informationen aus überfahrenen Transpondereinrichtungen ausliest, und
Verwenden der ständig aufgenommenen Positionsdaten dazu, für das Fahrzeug in Echtzeit die Fahrtrichtung zu steuern.

12. Verfahren nach Anspruch 11, ferner die Schritte enthaltend:

Speichern sämtlicher ausgelesener Daten bis zum Ort, an dem die Ware im Lager eingelagert wird,
Bestimmen der Einlagerungsposition der Ware anhand der aus den Transpondereinrichtungen ausgelesenen Information, und
Abspeichern der endgültigen Einlagerposition der Ware in einer Computereinrichtung.

13. Fahrzeug zum Ein- und Auslagern von Waren in einem Lager, mit:

einer Leseeinrichtung zum automatischen Auslesen von Informationen aus Transpondereinrichtungen, die am Boden des Lagers verteilt sind und vom Fahrzeug überfahren werden, wobei die Informationen zumindest indirekt die Position der entsprechenden Transpondereinrichtung innerhalb des Lagers repräsentieren, und
eine Einrichtung zum Verwenden der ständig aufgenommenen Positionsdaten dazu, für das Fahrzeug in Echtzeit die Fahrtrichtung zu steuern.

14. Fahrzeug gemäß Anspruch 13, **dadurch gekennzeichnet, dass** das Fahrzeug über eine Computereinrichtung verfügt, die die von der Leseeinrichtung aus den Transpondern ausgelesenen Informationen empfängt und daraus zumindest die Position, an der die Ware innerhalb des Lagers eingelagert wird, bestimmt und speichert.

15. Fahrzeug gemäß Anspruch 13 oder 14, **dadurch gekennzeichnet,**
**dass** das Fahrzeug ein Gabelstapler ist, und/oder
**dass** das Fahrzeug über eine Übertragungseinrichtung verfügt, mittels der die gewonnenen Positionsdaten an eine Servereinrichtung drahtlos übertragen werden können.

Fig. 1

Fig.2

Fig. 3

Fig. 4 a.)

Fig. 4 b.)

Fig. 4 c.)

## Fig. 4 d.)

## Fig. 4 e.)

Fig. 4 f.)

Fig. 4 g.)

Fig. 4 h.)

**Europäisches Patentamt**
**European Patent Office**
**Office européen des brevets**

# EUROPÄISCHER RECHERCHENBERICHT

**Nummer der Anmeldung**

EP 09 01 3968

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 01/44082 A (SAMSYS TECHNOLOGIES INC [CA]; HORWITZ CLIFFORD A [CA]; DAVIDSON WILLIA) 21. Juni 2001 (2001-06-21) * Seite 16, Zeile 21 - Seite 23, Zeile 25; Abbildungen 3-5 * ----- | 1-15 | INV. G01S13/02 |
| Y | EP 0 800 129 A (FIAT OM CARRELLI ELEVATORI [IT]; CONSORZIO TELEROBOT [IT]) 8. Oktober 1997 (1997-10-08) * Seite 2, Spalte 1, Zeile 25 - Spalte 2, Zeile 5 * ----- | 1-15 | |
| A | WO 01/06401 A (PINPOINT CORP) 25. Januar 2001 (2001-01-25) * Seite 8, Zeile 22 - Seite 9, Zeile 11 * * Seite 13, Zeile 7 - Seite 15, Zeile 22 * ----- | 1-15 | |
| A | EURO I.D.: "ANWENDUNGSBEISPIEL BLOCKSTORE" HOMEPAGE, EURO I.D., März 2002 (2002-03), XP002311534 INTERNET * das ganze Dokument * | 1-15 | |
| A | -& EURO I.D.: "ANWENDUNGSBEISPIEL BLOCKSTORE" EURO .I.D, August 2000 (2000-08), XP002311535 * das ganze Dokument * ----- | 1-15 | **RECHERCHIERTE SACHGEBIETE (IPC)** G01S |
| A | RFID JOURNAL: "RFID Speeds P&G Plant Throughput" RFID JOURNAL, 3. Februar 2003 (2003-02-03), XP002311536 * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| München | 16. Dezember 2009 | Johansson, Roland |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 3968

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-2009

| Im Recherchenbericht angeführtes Patentdokument | Datum der Veröffentlichung | Mitglied(er) der Patentfamilie | | Datum der Veröffentlichung |
|---|---|---|---|---|
| WO 0144082 A | 21-06-2001 | AU | 2138701 A | 25-06-2001 |
| | | CA | 2394361 A1 | 21-06-2001 |
| | | EP | 1297462 A2 | 02-04-2003 |
| | | US | 2003083964 A1 | 01-05-2003 |
| | | US | 6496806 B1 | 17-12-2002 |
| EP 0800129 A | 08-10-1997 | DE | 19613386 A1 | 09-10-1997 |
| | | JP | 10120393 A | 12-05-1998 |
| | | US | 5938710 A | 17-08-1999 |
| WO 0106401 A | 25-01-2001 | AU | 6217100 A | 05-02-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19938345 C1